# EUROPÄISCHE PATENTSCHRIFT

(11) **EP 1 616 476 B1**
(45) Veröffentlichungstag und Bekanntmachung des Hinweises auf die Patenterteilung: **23.01.2008**
(21) Anmeldenummer: 05105261.1
(22) Anmeldetag: 15.06.2005
(51) Int. Cl.: A01F 15/14

(54) **Vorrichtung zum Sichern eines losen Garnendes auf einem Rundballen**
Device to fix a loose end of twine on a round bale
Dispositif pour fixer un bout de fil libre sur une balle ronde

(30) Priorität: 10.07.2004 DE 102004033436
(43) Veröffentlichungstag der Anmeldung: 18.01.2006
(73) Patentinhaber: DEERE & COMPANY, Moline, Illinois 61265-8098 (US)
(72) Erfinder: Viaud, Jean, 70100, Gray (FR)
(74) Vertreter: Holst, Sönke

(56) Entgegenhaltungen:
- EP-A- 0 535 532
- EP-A- 1 064 839
- EP-A- 1 346 627
- US-A- 5 894 790

## Beschreibung

Die Erfindung betrifft eine Vorrichtung zum Sichern eines losen Garnendes auf einem Rundballen mittels eines Bandes, mit einem Verstellantrieb, der betreibbar ist, das Band in Eingriff mit einem Förderelement zu bringen, durch das es im Bereich des losen Garnendes um einen Rundballen wickelbar ist.

Die DE 41 32 664 A beschreibt eine Rundballenpresse mit einer Garnbindevorrichtung und einer Vorrichtung zum Sichern eines auf der Umfangsfläche des Rundballens aufliegenden Garnendes. Die Sicherung des Garnendes erfolgt nach einer Ausführungsform mittels eines Bandes, das klebend oder anderweitig selbsthaftend ausgebildet sein kann und mittels zweier Zuführrollen, von denen wenigstens eine angetrieben wird, und einem Leitblech zu einem Einlaßspalt für das Erntegut geführt wird. Dort wird das Band von dem sich drehenden Ballen erfaßt und um diesen gewickelt. Das Abtrennen des Bands von der Vorratsrolle erfolgt durch Abschalten des Antriebs der Zuführrollen, was zum Abreißen des Bands führt. Als nachteilig ist hier anzusehen, dass die Zuführrollen einen eigenen Antrieb benötigen.

Eine andere Vorrichtung zum Sichern eines losen Garnendes auf einem Rundballen wird in der DE 199 30 674 A beschrieben. Dort wird ein loses Ende des Bandes mittels einer motorisch bewegten Leiteinrichtung an ein angetriebenes Förderelement angedrückt, insbesondere an einen Riemen, und von diesem mitgenommen und an den Umfang des Ballens verbracht. Das Abtrennen des Bandes von seiner Vorratsrolle erfolgt durch eine separate Trenneinrichtung, die sich aus einer Leiste und daran angeordneten spitzen Stiften zusammensetzt. Die durch eine motorische Betätigungsvorrichtung bewegbare Leiteinrichtung bringt das Band in Anlage an die Trenneinrichtung, sobald der Ballen hinreichend umwickelt ist, so dass der um den Ballen gewickelte Bandabschnitt vom verbleibenden Vorrat abgetrennt wird. Bei dieser Vorrichtung muss das Band durch einen Bediener zunächst um mehrere Rollen herumgefädelt und dann zwischen der Leiteinrichtung und dem Förderelement eingeführt werden, was recht zeitaufwändig und fehlerträchtig ist.

Das der Erfindung zu Grunde liegende Problem wird darin gesehen, eine gegenüber dem Stand der Technik verbesserte Vorrichtung zum Sichern eines losen Garnendes auf einem Rundballen bereitzustellen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, den eigentlichen Bandvorrat durch den Verstellantrieb in einer ersten Position in Anlage mit dem Förderelement zu bringen, damit das Förderelement das freie Ende des Bandes erfasst und dem Rundballen zuführt, um das lose Garnende mit dem Band zu umwickeln. Anschließend wird der Bandvorrat wieder vom Förderelement abgezogen und in eine zweite Position verbracht. Das Förderelement kann ein Riemen oder ein anderes Pressmittel zur Herstellung des Rundballens sein. In einer anderen Ausführungsform kann aber auch der Rundballen selbst als Förderelement dienen. Die Vorrichtung wird dann in einer geeigneten Öffnung des Ballenpressraums angeordnet, z. B. seinem Einlass.

Auf diese Weise erspart man sich nach dem Verbrauch eines Bandvorrats ein umständliches Einfädeln des Bandanfangs des neuen Bandvorrats in die Vorrichtung.

Nachdem der Rundballen mit einer hinreichenden Menge des Bandes umwickelt wurde, wird vorzugsweise eine Trenneinrichtung aktiviert, die das um den Rundballen gewickelte Band vom verbleibenden Bandvorrat abtrennt. Um einen separaten Antrieb zum Bewegen der Trenneinrichtung zwischen ihrer aktiven und inaktiven Stellung einzusparen, bietet es sich an, für diese Aufgabe ebenfalls den Verstellantrieb zu verwenden. Alternativ wäre es auch möglich, einen separaten Antrieb für die Trenneinrichtung vorzusehen, oder den Bandvorrat durch eine Bremse zu stoppen, damit das Band abreißt.

Der Verstellantrieb bringt vorzugsweise den Umfang des Bandvorrats außer Eingriff mit dem Förderelement und bewegt synchron damit die Trenneinrichtung in ihre aktive Position. Die Bewegung der Trenneinrichtung erfolgt zweckmäßigerweise auf einer Kreisbahn, obwohl auch eine lineare Bewegung denkbar wäre.

Der Verstellantrieb bewegt den Bandvorrat auf einer geraden oder bogen- bzw. kurvenförmigen Bahn zwischen der ersten und zweiten Position. Es kommen somit Linear- oder Rotationsantriebe infrage. Diese Bewegung kann mittels eines drehbaren Elements, das auf einer den Bandvorrat tragenden Achse gelagert ist, und eines langgestreckten Elements, das die Bewegung des Bandvorrats nicht mitvollzieht, und auf dem das drehbare Element abrollt, in eine Drehbewegung der Trenneinrichtung umgesetzt werden. Als langgestrecktes Element kann insbesondere eine Zahnstange verwendet werden, während das drehbare Element dann ein Zahnrad sein kann.

Eine gute Trennwirkung wird erreicht, wenn die Trenneinrichtung das Band gegen einen Amboss bewegt.

Die Trenneinrichtung befindet sich vorzugsweise stromauf des Berührungspunkts zwischen Bandvorrat und Förderelement. In ihrer aktiven Position kommt sie somit zum Zusammenwirken mit der Außenseite des Bandes.

In den Zeichnungen sind drei nachfolgend näher beschriebene Ausführungsbeispiele der Erfindung dargestellt. Es zeigt:
- Fig. 1: eine Rundballenpresse in Seitenansicht und in schematischer Darstellung,
- Fig. 2: eine vergrößerte perspektivische Ansicht des rückwärtigen Bereichs der Rundballenpresse mit einer Vorrichtung zum Sichern eines losen Garnendes auf einem Rundballen,
- Fig. 3: den rückwärtigen Bereich der Rundballenpresse aus Figur 2 in einer seitlichen Ansicht,
- Fig. 4: den rückwärtigen Bereich der Rundballenpresse aus Figur 2 in einer rückwärtigen Ansicht,
- Fig. 5: eine seitliche Ansicht der Vorrichtung aus Figur 2 in ihrer Ruhestellung,
- Fig. 6: eine seitliche Ansicht der Vorrichtung aus Figur 2 in einer Position, in der Band vom Förderelement erfasst wird,
- Fig. 7: eine seitliche Ansicht der Vorrichtung analog der Figur 5, jedoch mit einem verminderten Bandvorrat
- Fig. 8: eine seitliche Ansicht der Vorrichtung analog der Figur 6, jedoch mit einem verminderten Bandvorrat,
- Fig. 9: eine seitliche Ansicht einer zweiten Ausführungsform der Vorrichtung zum Sichern des losen Garnendes auf dem Rundballen, und
- Fig. 10: eine seitliche Ansicht einer dritten Ausführungsform der Vorrichtung zum Sichern des losen Garnendes auf dem Rundballen.

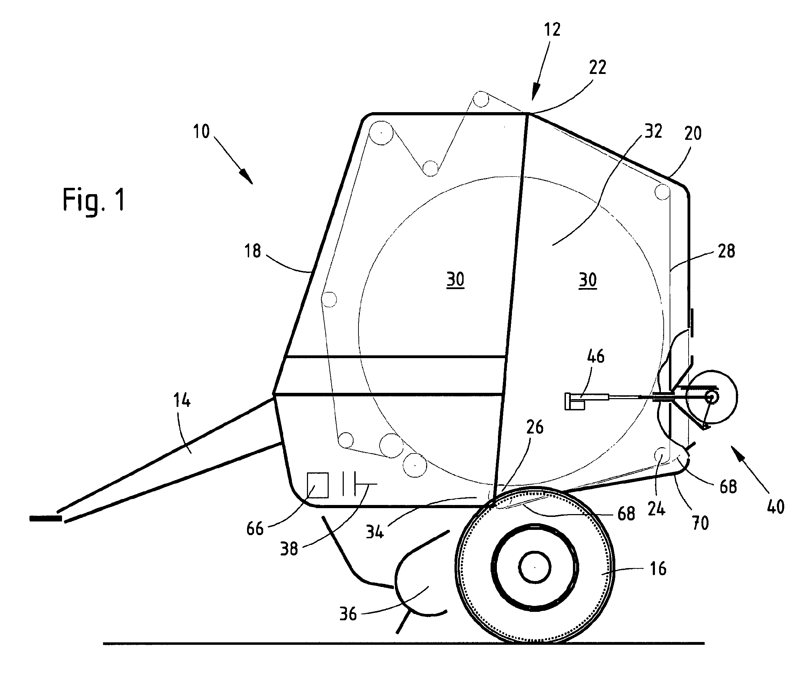

Die Figur 1 zeigt eine Rundballenpresse 10 mit einem Gehäuse 12, das mittels einer Deichsel 14 an einen nicht dargestellten Ackerschlepper angehängt werden kann, um bezüglich der Figur 1 nach links in einer Fahrtrichtung über ein Feld gezogen zu werden, und sich auf Rädern 16 abstützt. Das Gehäuse 12 setzt sich aus einer vorderen, starren Gehäusehälfte 18 und einer rückwärtigen, schwenkbaren Gehäusehälfte 20 zusammen, die in einem oben liegenden Gelenk 22 schwenkbar miteinander verbunden sind. Das Gehäuse 12 trägt eine Vielzahl von Walzen, von denen eine rückwärtige untere Walze 24 und eine vordere untere Walze 26 der rückwärtigen Gehäusehälfte 20 gezeigt sind. Über die Walzen 24, 26 verlaufen mehrere nebeneinander angeordnete endlose Förderelemente 28, die mit Seitenwänden 30 des Gehäuses 12 einen Ballenpreßraum 32 größtenteils umgeben. In diesem Ausführungsbeispiel sind die Förderelemente 28 als Riemen ausgebildet. In dem unteren Bereich des Ballenpreßraums 32 ist ein Einlass 34 vorgesehen, der rückwärtig von der Walze 26 begrenzt wird und von einer Pick-Up 36 aufgenommenes Gut in den Ballenpreßraum 32 eintreten läßt.

Unterhalb der Deichsel 14 und im Bereich des Einlasses 34 ist eine Garnbindevorrichtung 38 vorgesehen, mit der Garn um den sich drehenden Rundballen gewickelt werden kann, um diesen zu binden. In diesem Ausführungsbeispiel ist die Garnbindevorrichtung 38 so ausgebildet, daß die letzten Garnwindungen an der in Vorwärtsfahrtrichtung linken Seite des Rundballens aufgelegt werden. Eine soweit beschriebene Rundballenpresse 10 ist bereits im Stand der Technik bekannt und bedarf somit keiner weiteren Beschreibung.

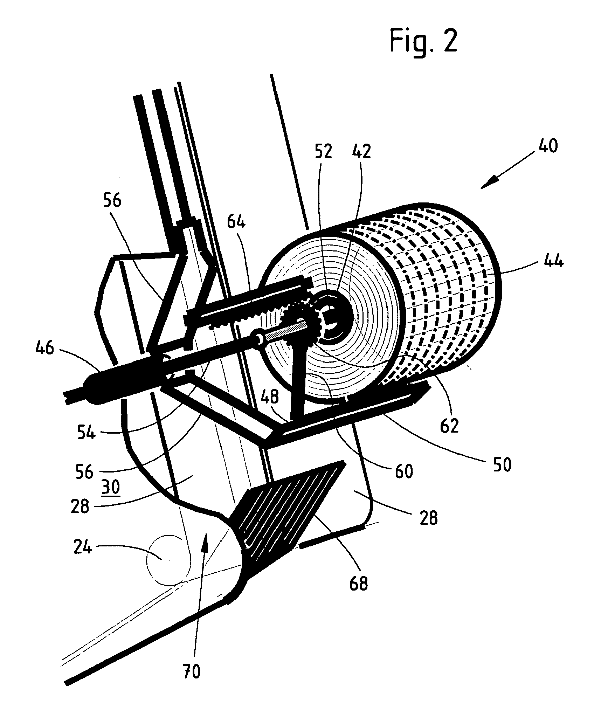

Die Figur 2 zeigt die rückwärtige Gehäusehälfte 20 von der in Fahrtrichtung linken Seite her betrachtet. In dieser Darstellung ist insbesondere die rechte rückwärtige Seitenwand 30, zwei Förderelemente 28 und eine Vorrichtung 40 zum Sichern der losen Garnenden auf der Oberfläche des Rundballens zu sehen. Die Vorrichtung 40 umfasst unter anderem einen Rollenträger 42, einen rollenförmigen Bandvorrat 44, einen Verstellantrieb 46, eine Trenneinrichtung 48, einen Amboss 50 und eine Leiteinrichtung 68.

Die Vorrichtung 40 ist hier in Verbindung mit einer Rundballenpresse 10 mit einem größenvariablen Ballenpreßraum 32 gezeigt, der von riemenförmigen Förderelementen 28 umgeben ist. Abweichend hiervon kann diese Vorrichtung 40 auch an einer Rundballenpresse 10 mit einem Ballenpressraum 32 unveränderlicher Größe und an einer anderen Stelle als an der Rückwand 60 der rückwärtigen Gehäusehälfte 20 vorgesehen werden. Ebenso können anstelle der Riemen auch Ketten oder Rollen verwendet werden.

Der Rollenträger 42 ist drehbar an einer Achse 52 gelagert, die sich quer zur Fahrtrichtung erstreckt und über einen in Fahrtrichtung verlaufenden Haltearm 54 mit dem beweglichen Abtrieb des Verstellantriebs 46 verbunden ist. Die Achse 52 ist um ihre Längsachse drehbar am Haltearm 54 gelagert. Der Verstellantrieb 46 ist an der Außenseite der Seitenwand 30 befestigt, während der Haltearm 54 in seiner Längsrichtung verschiebbar an einer Halterung 56 gelagert ist, die ihrerseits an der rückwärtigen Kante der Seitenwand 30 befestigt ist. Die Halterung 56 trägt auch den Amboss 50. Die Halterung 56 befindet sich an der linken Seite des Rollenträgers 42. Anders als in den Zeichnungen dargestellt, könnte die Halterung 56 auch die bezüglich der Fahrtrichtung rechten Enden der Achse 52 und/oder des Amboss 50 abstützen.

Der Rollenträger 42 ist zur Aufnahme einer Rolle des rollenförmigen Bandvorrats 44 vorgesehen, wobei zwischen dem Bandvorrat 44 und dem Rollenträger 42 eine Bremse (nicht gezeigt) vorgesehen sein kann, die die Aufgabe hat, den Bandvorrat 44 an einer freien Drehbewegung auf dem Rollenträger 42 zu hindern.

Der Bandvorrat 44 enthält eine große Menge von dünnem, elastischem, festem und haftendem Band 58. Es ist vorzugsweise netzartig. Die Haftung kann durch einen ein- oder zweiseitig auf das Band 58 aufgebrachten Kleber, durch die Netzform und/oder durch Adhäsion erreicht werden. Ist ein Bandvorrat 44 verbraucht, kann er durch einen neuen ersetzt werden. Es können beliebige Rollenträger 42 für den Bandvorrat 44 verwendet werden. Hier wird insbesondere auf bekannte Halterungen für Farbbänder oder auf Rollen vorliegendes Druckmaterial in Druckern, z. B. Thermodruckern, verwiesen. Der Rollenträger 42 umfasst auch Mittel zum Fixieren des Bandvorrats 44 in seitlicher Richtung.

Die Trenneinrichtung 48 umfasst eine sich über die Breite des Bands 58 erstreckende Leiste, die durch einen endseitigen Schwenkarm 60 schwenkbar an der Achse 52 gelagert ist. Die Schwenkachse der Trenneinrichtung 48 verläuft somit koaxial zur Drehachse des Rollenträgers 42. An der Leiste 66 sind mehrere sich von der Leiste 66 in Richtung auf das Band 58 zu erstreckende Stifte und/oder Zacken angebracht. Anstelle der Stifte bzw. Zacken könnten auch Zähne vorgesehen sein, mit denen es möglich ist, das Band zu perforieren, so dass es reißt, wenn es durchdrungen wird. In der in Figur 2 gezeigten Ruhestellung der Trenneinrichtung 48 liegt sie am Amboss 50 an. Der Schwenkarm 60 ist mit einem koaxial zur Achse 52 angeordneten Zahnrad 62 verbunden. Das Zahnrad 62 kämmt mit einer Zahnstange 64, die sich etwa horizontal und in Fahrtrichtung erstreckt und an ihrer Vorderseite an der Halterung 56 befestigt ist.

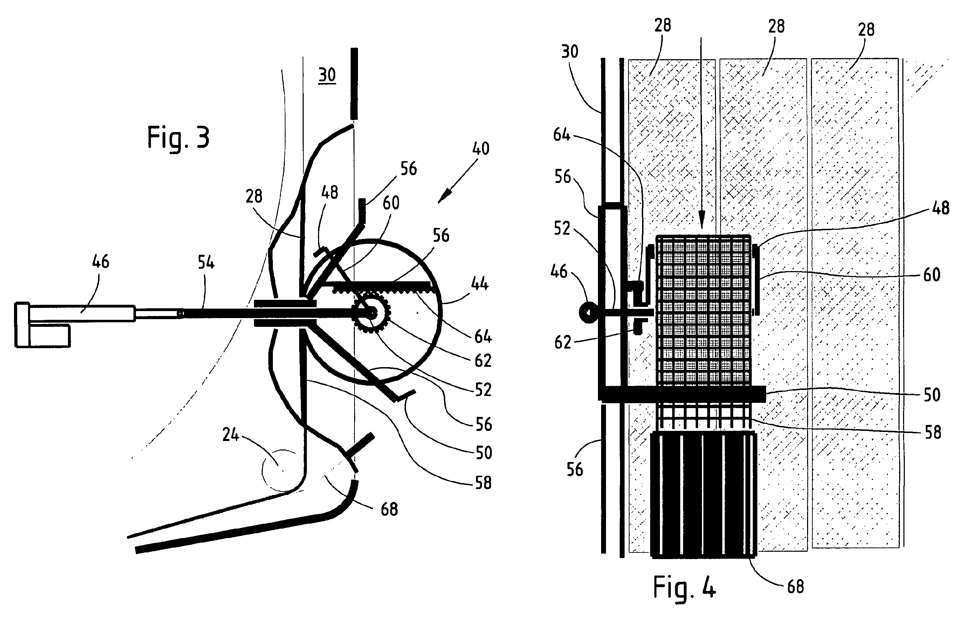

Durch die beschriebene Anordnung lässt sich durch den Verstellantrieb 46 die Achse 52 mit dem darauf angeordneten Rollenträger 42 und dem Bandvorrat 44 in Fahrtrichtung der Rundballenpresse 10 zwischen einer ersten Position, in der der Bandvorrat 44 am Förderelement 28 anliegt, (Figur 3, 6 und 8) und einer zweiten Position (Figur 1, 2, 5 und 7) verschieben, in der der Bandvorrat 44 vom Förderelement 28 beabstandet ist. Die parallel dazu verlaufende Zahnstange 64 und das Zahnrad 62 bewirken beim Verschieben der Achse 52 eine Drehung der Trenneinrichtung 50 um die Achse 52. Wird die Achse 52 durch den Verstellantrieb 46 nach vorn verschoben, dreht sich die Trenneinrichtung 48 bezüglich der Figur 2 im Uhrzeigersinn und wird somit in Richtung auf das Förderelement 28 bewegt. Der Verstellantrieb 46 verschiebt den Haltearm 54 somit linear. Der Verstellantrieb 46 kann ein Pneumatikzylinder, Hydraulikzylinder oder ein elektrischer Linearantrieb sein und ist mit einer Steuerung 66 verbunden.

Die Leiteinrichtung 68 erstreckt sich von einem vorderen Ende, das sich unterhalb des Förderelementes 28 und der Walze 26 befindet, nach hinten und oben bis unterhalb der Walze 24 und von dort schräg nach hinten und oben. Die dem Band 58 zugewandte Oberfläche der Leiteinrichtung 68 ist mit einem relativ geringen Reibwert ausgestattet.

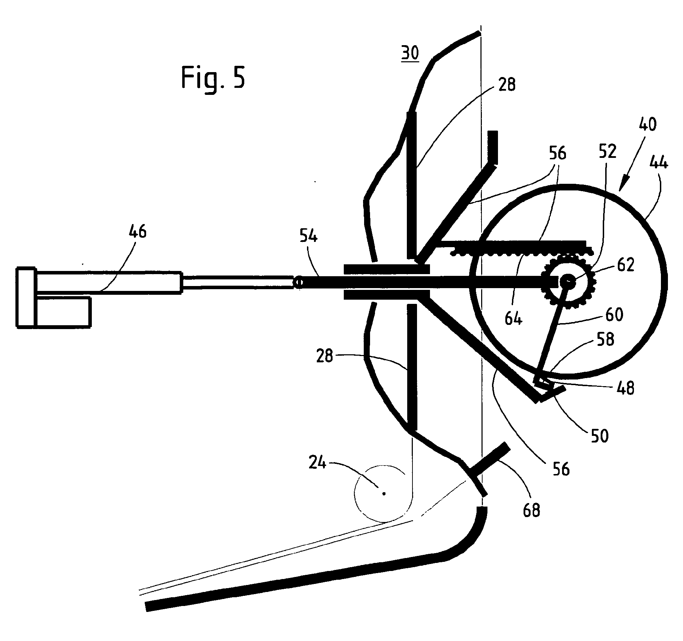

Nach alledem ergibt sich folgende Funktion, wobei davon ausgegangen wird, dass sich das freie Ende des Bandes 58 zwischen dem Amboss 50 und der Trenneinrichtung 48 befindet, während sich die Trenneinrichtung 52 in der in Figur 2 gezeigten Stellung befindet. Es liegt die in der Figur 5 dargestellte Situation vor.

Nach einem abgeschlossenen Bindevorgang durch die Garnbindevorrichtung 38 liegen ein oder mehrere lose Garnenden auf dem linken Endbereich des Rundballens und zwar in Deckung mit dem Band 58. Die Steuerung 66 erhält ein auf diesen Sachverhalt hinweisendes Signal und veranlasst den Verstellantrieb 46, den Haltearm 54 und die Achse 52 in Fahrtrichtung nach vorn zu bewegen. Gleichzeitig wird die Trenneinrichtung 48 (bezüglich der Figuren 1 bis 3) im Uhrzeigersinn gedreht. Dadurch gerät der Umfang des Bandvorrats 44 in Anlage an das ihm benachbarte Förderelement 28, was zum Abwickeln des Bandes 58 vom Bandvorrat 44 führt.

Das freie Ende des Bandes 58 wird somit sukzessive in einen Zwischenraum 70 zwischen dem Förderelement 28 und der Leiteinrichtung 68 gefördert und gelangt dann in den Spalt zwischen dem Bereich des Förderelements 28, der sich zwischen den Walzen 24, 26 erstreckt, und der Leiteinrichtung 68. Aufgrund einer hohen Reibung zwischen dem Band 58 und dem Förderelement 28 einerseits und einer geringen Reibung zwischen dem Band 58 und der Leiteinrichtung 68 andererseits wird das Band 58 mitgenommen und bis zu dem Einlass 34 gefördert, wo es um die Walze 26 herumläuft und in den Spalt zwischen dem Rundballen und dem Förderelement 28 gelangt. Der Rundballen nimmt das Band 58 weiter mit und wickelt es um seine Umfangsfläche im Bereich der losen Garnenden.

Nach mehr als einer Umdrehung des Rundballens legt sich die zweite Lage des Bandes 58 auf die erste Lage auf und haftet aufgrund der Adhäsion und/oder Netzform des Bandes und/oder des Klebemittels, so daß die losen Garnenden gesichert sind.

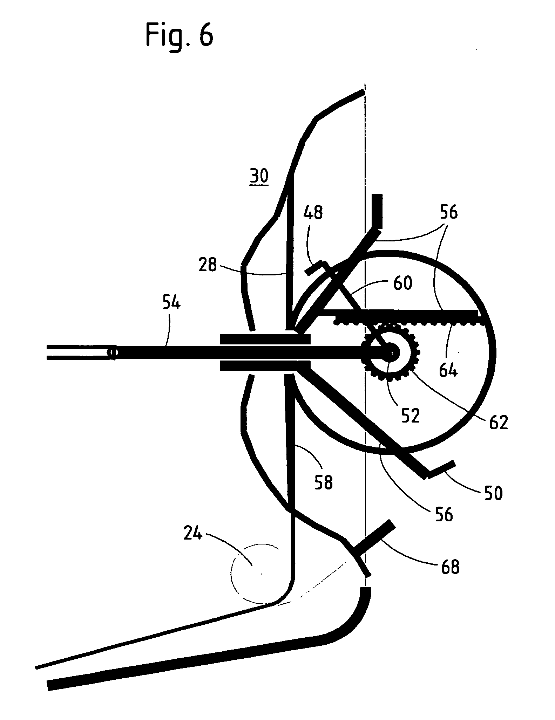

Sobald ein sicherer Haftschluß der Bandlagen gewährleistet ist, was sie an einer verstrichenen Zeit, durch einen Drehsensor am Bandvorrat 44 oder auf beliebige andere Weise erkennen kann, veranlasst die Steuerung 66 den Verstellantrieb 46, den Haltearm 52 in die zweite Richtung zu verschieben, d. h. nach hinten. Nunmehr wird durch die Verschiebung der Achse 52 zunächst der Umfang des Bandvorrats 42 außer Eingriff mit der Oberfläche des Förderelements 28 gebracht. Außerdem drehen die Zahnstange 64 und das Zahnrad 62 die Trenneinrichtung (bezüglich der Figuren 1 bis 3) im Gegenuhrzeigersinn, was dazu führt, dass die Trenneinrichtung 48 in ihre aktive Stellung gegen den Amboss 54 gedreht wird. Dadurch wird das Band 58 zwischen der Trenneinrichtung 48 und dem Amboss 54 eingeschlossen, so dass die Stifte, Zähne, Zacken oder dergleichen der Trenneinrichtung 48 in das Band 58 eindringen. Diese Situation ist in der Figur 6 dargestellt. Sobald das Band 58 von den überstehenden Elementen der Trenneinrichtung 48 durchdrungen ist, reißt das unter Zug stehende, stromabwärts der Trenneinrichtung 48 gelegene Trum des Bandes 58 ab, während der mit dem Bandvorrat 44 verbundene Teil am Amboss 50 gehalten wird. Da der Rollenträger 42 aufgrund der Bremse nicht oder kaum nachdreht, kommen er und der Bandvorrat 44 unmittelbar zum Stehen.

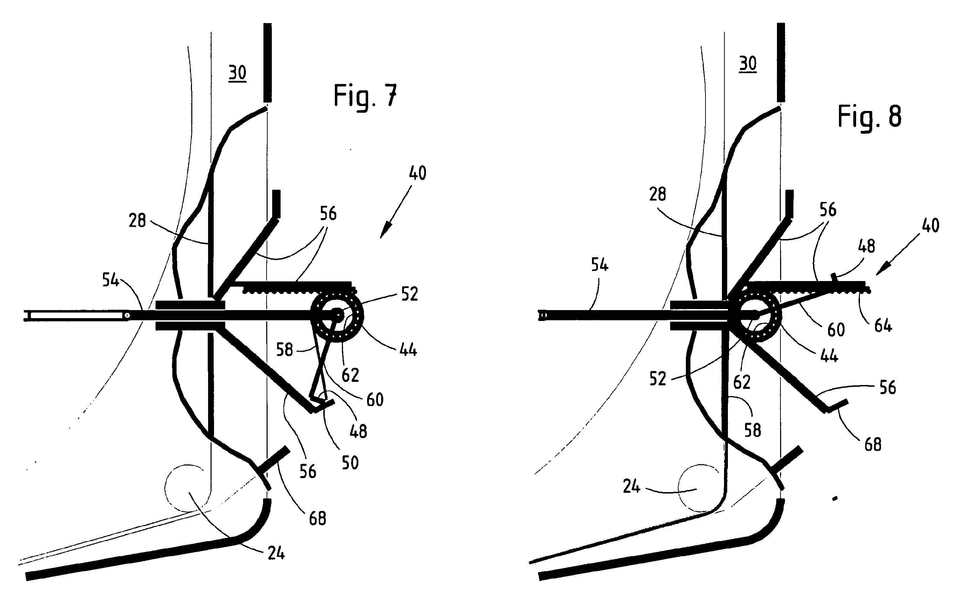

Der Bandvorrat 44 wird nach und nach kleiner, wenn mehrere Rundballen umwickelt werden. Dann liegt die in den Figuren 7 und 8 dargestellte Situation vor, die den Positionen aus Figur 5 und 6 entspricht, wobei jedoch der Bandvorrat 44 kleiner geworden ist. Der Bewegungsbereich des Verstellantriebs 46 ist hinreichend groß, um auch den Umfang des kleineren Bandvorrates 44 sicher an das Förderelement 28 bringen zu können. Die Steuerung 66 bewegt den Verstellantrieb 46 jeweils nur so weit nach vorn, dass ein hinreichender Kontakt zwischen Bandvorrat 44 und Förderelement 28 hergestellt ist, um insbesondere im Falle eines größeren Bandvorrats 44 eine Beschädigung von Komponenten der Vorrichtung 40 zu vermeiden. Die Steuerung 66 kann dazu eine Kraft im Haltearm 54 erfassen oder den von einer elektromotorischen Verstelleinrichtung 46 aufgenommenen elektrischen Strom, der plötzlich ansteigt, wenn der Bandvorrat 44 das Förderelement 28 berührt, messen und mit einem Schwellenwert vergleichen. Sobald der Schwellenwert überschritten wird, wird der Verstellantrieb 46 abgeschaltet. Bei einem hydraulisch arbeitenden Verstellantrieb 46 kann analog der Druck oder Fluss des zu seiner Betätigung verwendeten hydraulischen Fluids gemessen werden. Vorzugsweise zieht der Verstellantrieb 46 den Bandvorrat 44 mit einer definierten Kraft, die in der beschriebenen Weise gemessen werden kann und der Steuerung 66 als Eingabe vorliegt, gegen das Förderelement 28. Es wäre auch die Verwendung einer geeigneten Feder zwischen dem Verstellantrieb 46 und dem Haltearm 54 denkbar, um die definierte Kraft zu erzeugen.

Anhand der Figuren 7 und 8 ist erkennbar, dass der Schwenkbereich der Trenneinrichtung 48 gegenüber einem größeren Bandvorrat 44, wie er in den Figuren 5 und 6 dargestellt wurde, vergrößert ist. Die Funktion der Trenneinrichtung 48 ist ansonsten jedoch identisch.

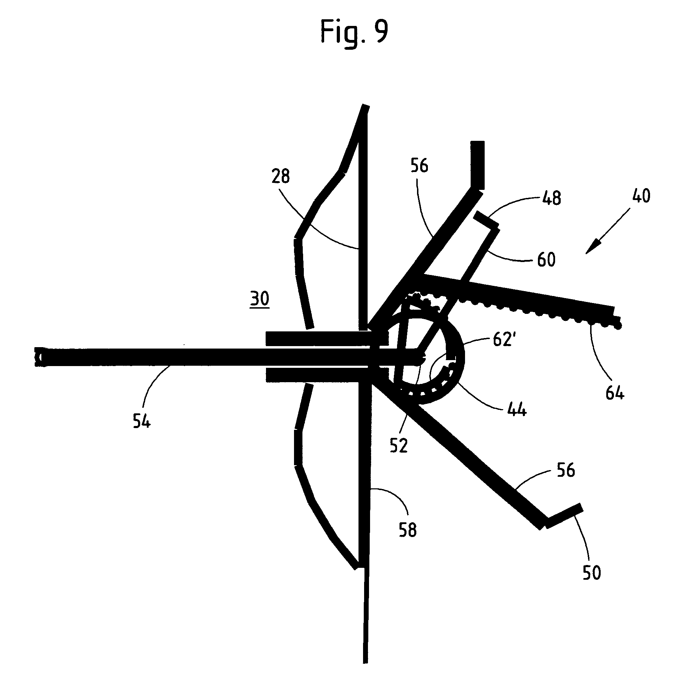

In der Figur 9 ist eine zweite Ausführungsform einer Vorrichtung 40 dargestellt. Mit der ersten Ausführungsform übereinstimmende Elemente sind mit denselben Bezugszeichen gekennzeichnet. Der wesentliche Unterschied zur ersten Ausführungsform besteht in der Form des Zahnrads 62', das hier nicht mit kreisförmigem, sondern elliptischem Querschnitt ausgebildet ist. Der Radius des mit der Zahnstange 64 zusammenwirkenden Bereichs des Zahnrads 62' steigt somit an, je weiter der Verstellantrieb 42 die Achse 52 nach vorn bewegt hat. Dadurch erhält man dort ein geringeres Übersetzungsverhältnis, was die Position der Trenneinrichtung 48 in der Stellung beim Abrollen des Bandes 58 weniger stark als bei der ersten Ausführungsform von der Größe des Bandvorrats 44 abhängen lässt.

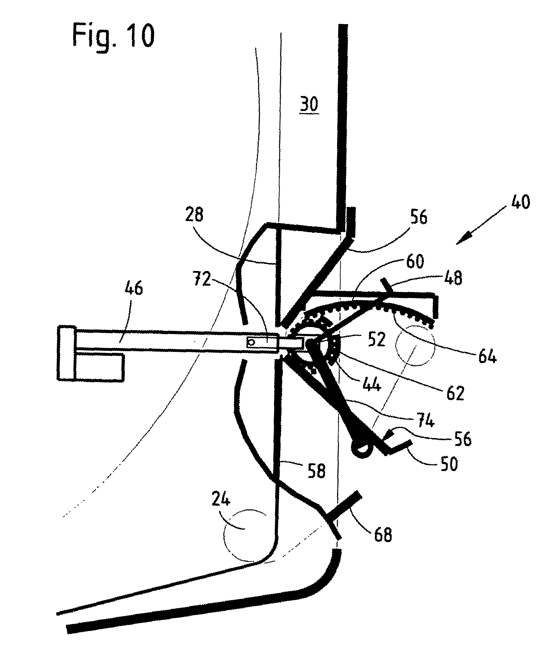

In der Figur 10 ist eine dritte Ausführungsform einer Vorrichtung 40 dargestellt. Mit der ersten Ausführungsform übereinstimmende Elemente sind mit denselben Bezugszeichen gekennzeichnet. Der wesentliche Unterschied zur ersten Ausführungsform besteht darin, dass der Verstellantrieb 42 über eine erste Kurbel 72 mit der Achse 52 verbunden ist, die über eine zweite Kurbel 74 an der Halterung 56 angelenkt ist. Die erste Kurbel 72 ist an ihrem in Fahrtrichtung vorderen Ende um eine horizontale und quer zur Vorwärtsrichtung verlaufende Schwenkachse drehbar am Abtrieb des Verstellantriebs 42 angelenkt. Die erste Kurbel 72 ist an ihrem in Fahrtrichtung rückwärtigen Ende um eine horizontale und quer zur Vorwärtsrichtung verlaufende Schwenkachse drehbar an der Achse 52 angelenkt. Die zweite Kurbel 74 ist an ihrem oberen Ende um eine horizontale und quer zur Vorwärtsrichtung verlaufende Schwenkachse drehbar an der Achse 52 angelenkt. Die zweite Kurbel 74 ist an ihrem unteren Ende um eine horizontale und quer zur Vorwärtsrichtung verlaufende Schwenkachse drehbar an der Halterung 56 angelenkt. Dadurch bewegt sich die Achse 52 auf einer Kreisbahn, an deren Form die Zahnstange 64 angepasst ist.

Alternativ könnte der Verstellantrieb 48 mit einem Zapfen in ein Langloch eingreifen, das sich in der zweiten Kurbel 74 vertikal erstreckt. Dann könnte die erste Kurbel 72 entfallen. Auch könnte der Verstellantrieb 48 ein Drehantrieb sein, der die zweite Kurbel 74 um ihre untere Schwenkachse dreht. Die erste Kurbel 72 würde dann ebenfalls entfallen.

Die Funktionsweisen der zweiten und dritten Ausführungsform stimmen mit der Funktionsweise der ersten Ausführungsform überein.

## Patentansprüche

1. Vorrichtung (40) zum Sichern eines losen Garnendes auf einem Rundballen mittels eines Bandes (58), mit einem Verstellantrieb (46), der betreibbar ist, das Band (58) in Eingriff mit einem Förderelement (28) zu bringen, durch das es im Bereich des losen Garnendes um einen Rundballen wickelbar ist, **dadurch gekennzeichnet, dass** ein rollenförmiger Bandvorrat (44) mit dem Band (58) durch den Verstellantrieb (46) zwischen einer ersten Position, in der der Bandvorrat (44) mit seinem Umfang am Förderelement (28) anliegt und das Band (58) durch das Förderelement (28) mitgeführt wird, was zum Abwickeln des Bandes (58) vom Bandvorrat (44) führt, und einer zweiten Position, in der der Bandvorrat (44) vom Förderelement (28) beabstandet ist, bewegbar ist.

2. Vorrichtung (40) nach Anspruch 1, **dadurch gekennzeichnet, dass** der Verstellantrieb (46) betreibbar ist, eine Trenneinrichtung (48) zum Abtrennen des Bandes (58) zwischen einer inaktiven und einer aktiven Position zu bewegen.

3. Vorrichtung (40) nach Anspruch 2, **dadurch gekennzeichnet, dass** der Verstellantrieb (46) betreibbar ist, gleichzeitig den Bandvorrat (44) vom Förderelement (28) abzuziehen und die Trenneinrichtung (48) in die aktive Position zu bewegen.

4. Vorrichtung (40) nach Anspruch 2 oder 3, **dadurch gekennzeichnet, dass** die Trenneinrichtung (48) zwischen der aktiven und der inaktiven Position eine Drehbewegung vollführt.

5. Vorrichtung (40) nach einem der Ansprüche 2 bis 4, **dadurch gekennzeichnet, dass** der Verstellantrieb (46) über eine Antriebsverbindung mit einem drehbaren Element, insbesondere einem Zahnrad (62, 62'), und einem damit zusammenwirkenden, langgestreckten Element, insbesondere einer Zahnstange (64), mit der Trenneinrichtung (48) zusammenwirkt.

6. Vorrichtung (40) nach Anspruch 5, **dadurch gekennzeichnet, dass** der Bandvorrat (44) auf einer Achse (52) gelagert ist, die durch den Verstellantrieb (46) auf einer Bahn bewegbar ist, dass das drehbare Element auf der Achse (52) gelagert ist und mit der Trenneinrichtung (48) in Antriebsverbindung steht, und dass das langgestreckte Element stationär angeordnet ist.

7. Vorrichtung (40) nach einem der Ansprüche 2 bis 6, **dadurch gekennzeichnet, dass** der Verstellantrieb (46) eingerichtet ist, die Trenneinrichtung (48) gegen einen Amboss (50) zu bewegen.

8. Vorrichtung (40) nach einem der Ansprüche 2 bis 7, **dadurch gekennzeichnet, dass** sich die Trenneinrichtung (48) in ihrer inaktiven Position stromauf des Berührungspunkts zwischen dem Förderelement (28) und dem Bandvorrat (44) befindet.

9. Vorrichtung (40) nach einem der vorhergehenden Ansprüche, **dadurch gekennzeichnet, dass** der Verstellantrieb (46) eingerichtet ist, den Bandvorrat (44) auf einer geradlinigen oder bogenförmigen Bahn zu bewegen.

10. Vorrichtung (40) nach einem der Ansprüche 1 bis 9, **dadurch gekennzeichnet, dass** der Verstellantrieb (46) ein Linearantrieb oder ein Rotationsantrieb ist.

11. Vorrichtung (40) nach einem der Ansprüche 1 bis 10, **dadurch gekennzeichnet, dass** der Verstellantrieb (46) betreibbar ist, den Bandvorrat (44) mit einer definierten Kraft gegen das Förderelement (28) zu drücken.

12. Rundballenpresse (10) mit einer Vorrichtung (40) nach einem der Ansprüche 1 bis 11.

## Claims

1. Apparatus (40) for securing a loose twine end on a round bale by means of a band (58), having an adjusting drive (46), operable to bring the band (58) into engagement with a conveyor element (28), by means of which the band can be wound around a round bale in the area of the loose twine end, **characterized in that** a roll-shaped band supply (44), along with the band (58), is moveable by the adjusting drive (46) between a first position, in which the band supply (44) lies with its periphery against the conveyor element (28) and the band (58) is entrained by the conveyor element (28), which results in the band (58) being unwound from the band supply (44), and a second position, in which the band supply (44) is at a distance from the conveyor element (28).

2. Apparatus (40) according to Claim 1, **characterized in that** the adjusting drive (46) can be operated to move a separating device (48) for separating the band (58) between an inactive and an active position.

3. Apparatus (40) according to Claim 2, **characterized in that** the adjusting drive (46) can be operated to simultaneously draw the band supply (44) from the conveyor element (28) and to move the separating device (48) into the active position.

4. Apparatus (40) according to Claim 2 or 3, **characterized in that** the separating device (48) performs a rotational movement between the active and the inactive positions.

5. Apparatus (40) according to any of Claims 2 to 4, **characterized in that** the adjusting drive (46) cooperates with the separating device (48) via a drive connection with a rotatable element, in particular a toothed wheel (62, 62'), and a longitudinally extended element that cooperates therewith, in particular a gear rack (64).

6. Apparatus (40) according to Claim 5, **characterized in that** the band supply (44) is supported on an axle (52), the adjusting drive (46) moving the axle along a path, **in that** the rotatable element is supported on the axle (52) and is in driving connection with the separating device (48) and **in that** said longitudinally extended element is arranged stationary.

7. Apparatus (40) according to any of Claims 2 to 6, **characterized in that** the adjusting drive (46) is set up to move the separating device (48) against an anvil (50).

8. Apparatus (40) according to any of Claims 2 to 7, **characterized in that**, in its inactive position, the separating device (48) is positioned upstream of the point of contact between the conveyor element (28) and the band supply (44).

9. Apparatus (40) according to any of the preceding claims, **characterized in that** the adjusting drive (46) is set up to move the band supply (44) on a straight or arcuate path.

10. Apparatus (40) according to any of Claims 1 to 9, **characterized in that** the adjusting drive (46) is a linear drive or a rotary drive.

11. Apparatus (40) according to any of Claims 1 to 10, **characterized in that** the adjusting drive (46) can be operated to press the band supply (44) against the conveyor element (28) with a defined force.

12. Round bale press (10) having an apparatus (40) according to any of Claims 1 to 11.

## Revendications

1. Dispositif (40) destiné à fixer une extrémité de fil libre sur une balle ronde au moyen d'un ruban (58), comportant un mécanisme de manoeuvre (46) qui peut être utilisé pour amener le ruban (58) en prise avec un élément de transport (28), par lequel ledit ruban peut être enroulé autour d'une balle ronde dans la zone de l'extrémité de fil libre, **caractérisé en ce qu'**une réserve de ruban (44) en forme de bobine peut être déplacée avec le ruban (58) par le mécanisme de manoeuvre (46) entre une première position, dans laquelle la bobine de réserve (44) est en appui avec son pourtour contre l'élément de transport (28) et le ruban (58) est entraîné par l'élément de transport (28), et une deuxième position, dans laquelle la bobine de réserve (44) est située à distance de l'élément de transport (28).

2. Dispositif (40) selon la revendication 1, **caractérisé en ce que** le mécanisme de manoeuvre (46) peut être utilisé pour déplacer un dispositif de coupe (48), destiné à sectionner le ruban (58), entre une position inactive et une position active.

3. Dispositif (40) selon la revendication 2, **caractérisé en ce que** le mécanisme de manoeuvre (46) peut être utilisé pour détacher la bobine de réserve (44) de l'élément de transport (28) et déplacer simultanément le dispositif de coupe (48) dans la position active.

4. Dispositif (40) selon la revendication 2 ou 3, **caractérisé en ce que** le dispositif de coupe (48) effectue un mouvement de rotation entre la position active et la position inactive.

5. Dispositif (40) selon l'une quelconque des revendications 2 à 4, **caractérisé en ce que** le mécanisme de manoeuvre (46) coopère avec le dispositif de coupe (48) par l'intermédiaire d'une liaison d'entraînement comportant un élément rotatif, en particulier une roue dentée (62, 62'), et un élément allongé, en particulier une crémaillère (64), coopérant avec celui-ci.

6. Dispositif (40) selon la revendication 5, **caractérisé en ce que** la bobine de réserve (44) est montée sur un axe (52), qui peut être déplacé sur une trajectoire par le mécanisme de manoeuvre (46), **en ce que** l'élément rotatif est monté sur l'axe (52) et est en liaison d'entraînement avec le dispositif de coupe (48), et **en ce que** l'élément allongé est fixe.

7. Dispositif (40) selon l'une quelconque des revendications 2 à 6, **caractérisé en ce que** le mécanisme de manoeuvre (46) est conçu pour déplacer le dispositif de coupe (48) contre une enclume (50).

8. Dispositif (40) selon l'une quelconque des revendications 2 à 7, **caractérisé en ce que** le dispositif de coupe (48) dans sa position inactive est situé en amont du point de contact entre l'élément de transport (28) et la bobine de réserve (44).

9. Dispositif (40) selon l'une quelconque des revendications précédentes, **caractérisé en ce que** le mécanisme de manoeuvre (46) est conçu pour déplacer la bobine de réserve (44) sur une trajectoire droite ou courbe.

10. Dispositif (40) selon l'une quelconque des revendications 1 à 9, **caractérisé en ce que** le mécanisme de manoeuvre (46) est un système d'entraînement linéaire ou un système d'entraînement en rotation.

11. Dispositif (40) selon l'une quelconque des revendications 1 à 10, **caractérisé en ce que** le mécanisme de manoeuvre (46) peut être utilisé pour pousser la bobine de réserve (44) avec une force définie contre l'élément de transport (28).

12. Presse à balles rondes (10) comportant un dispositif (40) selon l'une quelconque des revendications 1 à 11.
